# EUROPEAN PATENT SPECIFICATION

(11) **EP 2 494 735 B1**
(45) Date of publication and mention of the grant of the patent: **18.01.2017**
(21) Application number: 10827040.6
(22) Date of filing: 26.10.2010
(51) Int. Cl.: H02J 3/14, H04L 12/28, G01D 4/00, D06F 33/02, H04L 12/12

(54) **NETWORK SYSTEM AND METHOD OF CONTROLLING THE SAME**
NETZWERKSYSTEM UND VERFAHREN ZU SEINER STEUERUNG
SYSTÈME DE RÉSEAU ET PROCÉDÉ DE COMMANDE DE CELUI-CI

(30) Priority: 26.10.2009 KR 20090101942; 24.06.2010 KR 20100059930
(43) Date of publication of application: 05.09.2012
(73) Proprietor: LG Electronics Inc., Yeongdeungpo-gu Seoul, 07336 (KR)
(72) Inventor: SEO, Munseok, Seoul 153-802 (KR); KIM, Yanghwan, Seoul 153-802 (KR); AHN, Junho, Seoul 153-802 (KR); SEO, Daegeun, Seoul 153-802 (KR); HWANG, Jinseong, Seoul 153-802 (KR); JANG, Bongmun, Seoul 153-802 (KR); LEE, Hoonbong, Seoul 153-802 (KR); LEE, Wookjin, Seoul 153-802 (KR)
(74) Representative: Ter Meer Steinmeister & Partner
(86) International application number: PCT/KR2010/007357
(87) International publication number: WO 2011/052956

(56) References cited:
- EP-A1- 0 727 668
- EP-A1- 1 372 238
- CA-A1- 2 665 397
- DE-A1-102007 019 350
- US-A- 5 924 486
- US-A1- 2003 178 894
- US-A1- 2004 133 314
- US-A1- 2009 088 907
- US-A1- 2009 240 380

## Description

### TECHNICAL FIELD

The present disclosure relates to a network system and a method of controlling the network system.

### BACKGROUND ART

In general, power for operating electric products such as electric home appliances or office equipment is supplied through a power plant, a power transmission line, and a power distribution line.

Such power is supplied from a central power source, not a distributed power source, so that the power spreads in a radial shape from the center to the periphery, which is supplier-centered rather than consumer-centered. In addition, the supplying of the power is analog and electromechanical, and damage due to an accident is manually undone, and related facilities are manually recovered.

The information about electricity charge can be known only through a power exchange, and thus, it is difficult to know the information about electricity charge in real time. In addition, since a pricing system is substantially fixed, it is difficult to provide incentives for consumers by using price variations. To address these limitations and improve the efficiency of energy, research is being actively carried out on a smart grid.

The smart grid means the next generation power system and a management system thereof, which are realized by mixing and combining a modernized power technology and an information communication technology. A typical power grid is vertical and centralized network that is controlled by a supplier, but the smart grid is a horizontal, cooperative, and distributed network that is distributed from a supplier and allows the interaction between suppliers and consumers.

In the smart grid, all electric appliances, power storage devices, and distributed power sources are connected to one another through a network, so that suppliers can interact with consumers. Thus, the smart grid is referred to as an 'energy Internet'. To realize the smart grid for power consumers such as a house or a building, it is needed that a separate electric product and a network connected to a plurality of electric products communicate with a power supply source through a two-way communication for power information, instead of just receiving power. Also, devices for the two-way communication are needed.

In addition, a method of controlling an electric product is needed, which can analyze an electricity charge in real time when the electric product is used, and can suppress the using of the electric product in a time period when an electricity price is high, thereby saving energy and electricity costs.

While a related art electric product is driven, a large amount of greenhouse gas is emitted to affect environmental pollution such as global warming.

EP 0 727 668 A1 describes a method for the management of the energy consumption in a domestic ambient having household appliances (LB,LS,FO) being equipped with an electronic control system (SC). The management of the electric energy consumption is realized by a control System (SC) of each of said electric appliances (LB,LS,FO), using information relating to the instantaneous total consumption of the electric energy (PT) in the domestic ambient.

US 2003/178894 A1 describes an energy management system for an appliance comprising an interface to receive a schedule having an off-peak time segment and an on-peak time segment; a control to determine an operation to be performed by the appliance; a mode selecting device to select between an energy management mode and an immediate start mode; and a Controller connected to the interface, the control, and the mode selecting device. The Controller initiates based on the selection of the energy management mode the operation only when a current time is within the off-peak time segment.

CA 2 665 397 A1 describes the supply of power and demand for power of power-side of Utility-provided services. In real-time a variable price for service is sent from Utilities' SUPPLY-SIDE via a Network to the DEMAND - SIDE, such as to smart appliances in homes, to search for and encourage or discourage use and thus manage demand for Utility services. Demand is managed in the aggregate per type of appliance and across all users, not just at peak times, but rather throughout the day as capacity is needed or otherwise becomes available.

EP 1 372 238 A1 describes a system that facilitates energy savings decisions by a home owner. The system increases the energy and cost efficiency of an energy supply network by providing a mechanism to reduce the peak level of energy demand.

US 2004/133314 A1 describes a system and method manage delivery of energy from a distribution network to one or more sites each having at least one device coupled to the distribution network and controllably consuming energy.

DE 10 2007 019350 A1 describes a device having a receiving unit receiving signals of an external control device, which indicates an existence of favorable time intervals. An automatic control device activates a consumer during a favorable time interval and deactivates the consumer outside the favorable time interval.

### DISCLOSURE OF INVENTION

### TECHNICAL PROBLEM

Embodiments provide a method of controlling an electric product comprising a refrigerator, which removes the concentration of power consumptions, so that a power supplier can effectively manage power consumptions and a consumer can save electricity costs and energy.

Examples also provide a network system that provides power information when driving an electric product comprising a refrigerator, and a method of controlling the network system.

Examples also provide a network system that provides, periodically or at a point when a time period is changed, a normal time period or a peak time period related with an electricity charge to perform an effective power saving operation, and a method of controlling the network system.

Examples also provide a network system that provides a power consumption amount according to an operation of an electric product, an estimated greenhouse gas emission amount according to an energy source, or an electricity charge to a user such that the user considers the saving of power with respect to power consumption, greenhouse gas, or an electricity charge, and a method of controlling the network system.

### SOLUTIONS TO PROBLEM

The object is solved by the features of the independent claims.

Preferably a network system includes: an advanced metering infrastructure configured to measure energy supplied from a power supply source; a communication device configured to communicate energy information related with the energy; and an energy management system recognizing the energy information to control driving of an electric product, wherein the energy management system limits a function of at least one part of power consumption units constituting the electric product, based on whether the recognized energy information is an on-peak time period.

Preferably a method of controlling a network system includes: performing a communication between a power supply source and a home network; recognizing an on-peak time period in which energy information including at least electricity cost information is over a set value; and limiting a function of a part of power consumption units constituting the electric product when at least one period of a driving time of an electric product is disposed within the on-peak time period.

The details of one or more embodiments are set forth in the accompanying drawings and the description below. Other features will be apparent from the description and drawings, and from the claims.

### ADVANTAGEOUS EFFECTS OF INVENTION

According to the network system, a method of controlling an electric product is provided, which removes the concentration of power consumptions, so that a power supplier can effectively manage power consumptions and a consumer can save electricity costs and energy.

In addition, power information is provided to a user when driving an electric product, so that a user can effectively perform a power saving operation.

In addition, electricity charge time period information and time information related with an electricity charge are provided periodically or at a point when a time period is changed, so that a user can reasonably select a process and perform an effective power saving operation.

In addition, power consumption according to an operation of an electric product, a greenhouse gas estimated emission amount according to an energy source, or an electricity charge is provided to a user such that the user considers the saving of power with respect to power consumption, greenhouse gas, or an electricity charge.

According to the embodiments, power consumptions can be dispersed and peak power can be reduced, thereby constructing the smart grid and saving energy.

### BRIEF DESCRIPTION OF DRAWINGS

Fig. 1 is a schematic view illustrating a smart grid according to an embodiment.
Fig. 2 is a schematic view illustrating a power supply network system in a residential customer according to an embodiment.
Fig. 3 is a front view illustrating an energy management system according to an embodiment.
Fig. 4 is a block diagram illustrating a control of a power supply source and a control of a home power supply network system according to an embodiment.
Fig. 5 is a block diagram illustrating a control of a home power supply network system according to another embodiment.
Figs. 6A and 6B are graphs illustrating power information provided to an ELECTRIC PRODUCT, according to an embodiment.
Fig. 7 is a block diagram illustrating a refrigerator as an electric product according to an embodiment.
Fig. 8 is a block diagram illustrating a dish washer as an electric product according to an example.
Fig. 9 is a block diagram illustrating a washing machine as an electric product according to an example.
Fig. 10 is a perspective view illustrating a washing machine according to an example.
Fig. 11 is a cross-sectional view illustrating the washing machine of Fig. 10.
Fig. 12 is a block diagram illustrating a control device of a washing machine according to an example.
Fig. 13 is a schematic view illustrating a screen of an output unit of Fig. 12.
Fig. 14 is a flowchart illustrating a method of controlling a washing machine according to an example.
Fig. 15 is a flowchart illustrating a method of controlling a washing machine according to another example.
Figs. 16 and 17 are flowcharts illustrating a power saving operation in a method of controlling a washing machine according to an example.

### MODE FOR INVENTION

Reference will now be made in detail to the embodiments of the present disclosure, examples of which are illustrated in the accompanying drawings.

All terms used herein have the same meanings as general terms understood by those of ordinary skill in the art. If the terms used herein collide with the general terms, the terms used herein take priority over the general terms. While the present disclosure has been particularly shown and described with reference to exemplary embodiments thereof, it will be understood by those of ordinary skill in the art that various changes in form and details may be made therein without departing from the scope of the present disclosure as defined by the following claims.

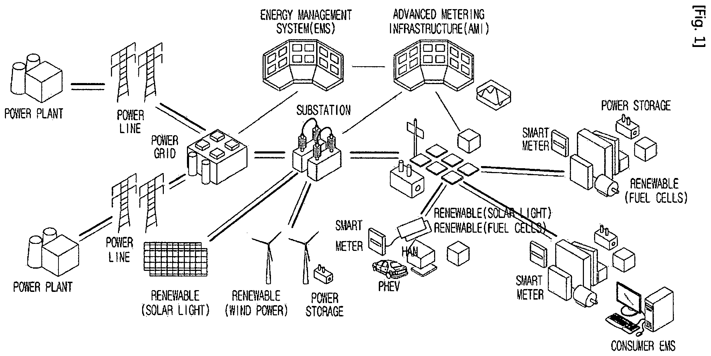

Fig. 1 is a schematic view illustrating a smart grid according to an embodiment. Referring to Fig. 1, the smart grid includes, as a power supply source, a power plant generating electricity by thermal power generation, nuclear power generation, or water power generation; and a solar power plant and a wind power plant that generate electricity from renewable energy sources such as solar light and wind power.

The power plant, such as a thermal power plant, a nuclear power plant, and a water power plant, supplies electricity to a sub-control center through a power line, and the sub-control center supplies the electricity to a substation and a power storage. Electricity generated from a solar power plant and a wind power plant may be supplied to a substation.

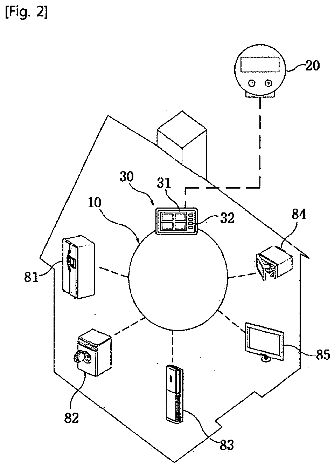

Electricity supplied to a substation maybe distributed through a power storage to residential customers or offices. Residential customers using a home area network (HAN) to be described in Fig. 2 may produce electricity by using fuel cells installed on an independent solar power plant or a plug in hybrid electric vehicle (PHEV) for their consumption or selling remaining electricity.

In addition, so-called smart metering devices are provided to consumers such as offices or residential customers to check power consumption or electric bills in real time. Accordingly, the consumers can take action to reduce power consumption or electric costs based on the real-time information about power consumption and electric bills.

Furthermore, in the smart grid, the power plants, the sub-control center, the power storages, and the consumers can communicate with each other (two-way communication). Thus, electricity is not transmitted to the consumers unilaterally but generated and distributed to the consumers according to the consumers' situations notified to the power storages, the sub-control centers, and the power plants.

Accordingly, such a smart grid requires an energy management system (EMS) that plays a pivotal role for real-time power consumption management and measurement, and an advanced metering infrastructure (AMI) that plays a pivotal role for real-time power consumption measurement. The energy management system and the advanced metering infrastructure may be configured as separate devices, or function as two devices in a single device.

The AMI of the smart grid is backbone technology for integrating consumers based on an open architecture. The AMI provides consumers with the ability to use electricity efficiently and power providers with the ability to detect problems on their systems and operate them efficiently. Herein, the open architecture means a standard for connecting all electric devices in a smart grid system regardless of the manufactures of the electric devices, unlike in a general communication network.

Therefore, the AMI of the smart grid enables consumer-friendly efficiency concepts like "prices to devices. That is, real-time price information of an electricity market may be transmitted through an EMS of each residential customer, and the EMS may communicate with an electric product (such as an electrical home appliance) provided to each residential customer and control the electric product.

Thus, a user may see the information displayed on the EMS to check electricity information of each electric appliance and carry out electricity information processing such as power consumption limit setting or electric charge limit setting to save energy and costs. The EMS may include a local EMS provided in an office or a residential customer, and a central EMS configured to process information collected from the local EMS through two-way communication.

Since real-time communication is possible between providers and consumers in a smart grid for exchanging power information, various consumers' responses to supplying of power, that is, real-time grid responses can be realized.

For example, when electricity costs vary according to time periods or according to power suppliers, a user can change or adjust a power consumption amount or a power consumption time according to the variation of the electricity costs. In addition, a power supplier may adjust a power cost or a power supply amount according to responses of a consumer.

Fig. 2 is a schematic view illustrating a power supply network system 10 in a residential customer that is a main consumer of a smart grid.

Referring to Fig. 2, the power supply network system 10 may include: a smart meter 20 that can measure in real time at least one of costs of power and electricity supplied to the residential customer; and an EMS 30 connected to the smart meter 20 and a plurality of electric products such as an electric home appliance and controlling the smart meter 20 and the electric products.

An electricity cost at each residential customer may be charged as a cost per time. A cost per time may be high in a time period when a power consumption amount quickly increases, and a cost per time may be low at midnight when a power consumption amount is small.

Furthermore, the EMS 30 may operate by communicating with another electric product such as a refrigerator 81, a washing or drying machine 82, an air conditioner 83, or a cooking appliance 84, a television 85 through a network. In-house communication may be performed by wireless or power line communication (PLC), and electric home appliances may be connected to each other for communicating with each other.

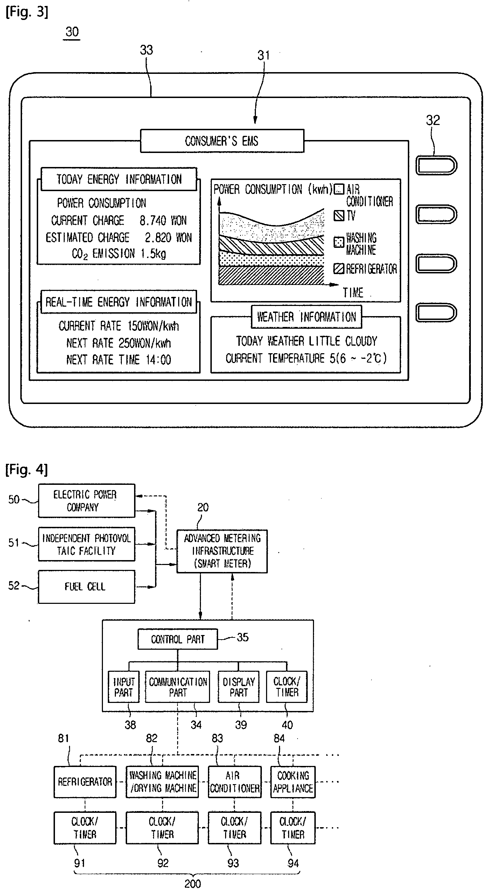

Referring to Fig. 3, the EMS 30 may include a display part 31 displaying at least one of outer condition information and power information (energy information) including information about power consumption or an electricity cost, an input part 32 that can be operated by a user, a communication part 34 (refer to Fig. 4) communicating with an outer device, and a clock 40 (refer to Fig. 4), and a control part 35 (refer to Fig. 4). For example, the EMS 30 may include a touch panel 33 that may include the display part 31. The display part 31 may display power information and/or outer condition information.

The power information may include at least one of an electricity consumption amount, a current electric charge, an electric charge estimated based on an accumulated history, today's energy information such as a carbon dioxide emission amount, an electric rate of a present time period, an electric rate of a next time period, and real-time energy information including information for a time period during which the electric rate varies.

The outer condition information may include at least one of various types of information such as current weather, temperature, humidity, rainfall, and wind. The display part 31 may display a graph that shows a power consumption amount and/or its variation according to a time period of each electric home appliance, and a graph that shows an electricity charge variation according to time periods.

The input part 32 may be disposed at a side of the display part 31 for a user to set an operation of an electric product. A user uses the input part 32 to set a limit of a power amount or an electricity charge of each electric home appliance, and thus, the EMS 30 can control the operation of each electric home appliance according to the setting.

The communication part 34 communicates with electric products such as the refrigerator 81, the washing machine 82, the air conditioner 83, and/or the cooking appliance 84 in a house as illustrated in Fig. 4 and may transmit and receive power information (power consumption information value) of the electric products.

The control part 35 analyzes, in real time, set information input by a user using an input part 38, and previously accumulated history information about the operation of an electric home appliance and power usage, and the amount of power supplied from the outside; and processes the information in real time to control the operation and power consumption of the electric home appliance.

Fig. 4 is a block diagram illustrating a control of a power supply source under a smart grid, and a control of a power supply network system that is in charge of supplying power to an electric appliance in home.

Referring to Fig. 4, the power supply source may an electric power company 50 including typical generating equipment (thermal power, nuclear power, and water power) or generating equipment using renewable energy (solar light, wind power, and terrestrial heat). In addition, the power supply source may include an independent photovoltaic facility 51 that can be provided to each residential customer, and a fuel cell 52 that can be provided to a fuel cell vehicle or a residential customer.

The power supply source is connected to an advanced metering infrastructure (also denoted by 20), and the advanced metering infrastructure 20 is connected to the EMS 30. That is, the power supply source, the advanced metering infrastructure 20, and the EMS 30 may communicate with one another.

However, when the advanced metering infrastructure 20 and the EMS 30 are formed in a single module, the power supply source may be connected to the module to communicate with the advanced metering infrastructure 20 and EMS 30.

As described above, the EMS 30 may include the control part 35, the input part 38, the display part 39, and the clock 40.

The EMS 30 and control parts provided to electric products are linked with each other to control the operations of the electric products, particularly, provides an electricity cost saving mode for saving electricity costs during the operation of an electric product, and an energy saving mode for reducing power consumption.

The electricity cost saving mode is operated based on information about an electricity charge that varies according to times when an electric product operates. For example, the control part 35 uses the clock/timer 40 to determine an electricity cost within a present time period. That is, the control part 35 can determine whether a time period is a time period where a current electricity cost is over a predetermined electricity cost (reference cost), i.e., a first time period (on-peak time period) or a time period where a current electricity cost is the predetermined electricity cost or less, i.e., a second time period (off-peak time period).

When the control part 35 determines that a present time is within the first time period, the control part 35 may inform a time for reaching the second time period. In the energy saving mode, an effect equivalent to a technical effect generated in a mode set by a user is generated, and a guide to a saving mode for reducing power consumption is executed or the saving mode is forcibly executed.

For example, when an electric product is a washing machine, although a user selects a standard operation mode, if the amount of water stored in the washing machine is small, the EMS and a control part provided to the washing machine may use another operation mode (e.g., quick operation mode) consuming less power than the standard operation mode, to control the washing machine. In this case, the amount of washing water consumed by the washing machine, a total driving time and a drying time of the washing machine, and the amount of power consumed by a heater are smaller than those of the standard operation mode.

However, the energy saving mode may change output of an electric product within the first and second time periods. That is, an electric product controlled in the energy saving mode is driven according to an output set in an operation mode selected within the second time period, but within the first time period, the electric product may be controlled to have a smaller output than that of the second time period or than the output set in a selected operation mode.

For example, a refrigerator as an electric product is controlled to generate a large amount of cool air when a driving time is disposed between the second time period in the energy saving mode, and is controlled to generate a small amount of cool air when a driving time is disposed between the first time period (the function of the refrigerator should be maintained by cool air accumulated through an excessive output control).

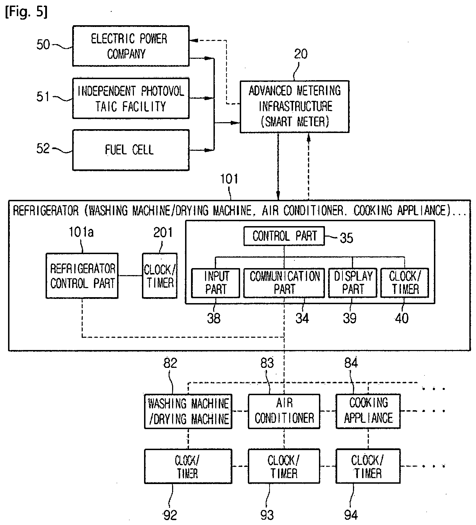

The energy saving mode or the electricity cost saving mode is controlled by the EMS 30 that is provided independently from the electric product as illustrated in Fig. 4, but the EMS 30 may be removably attached to an electric product, or provided integrally with an electric product. That is, referring to Fig. 5, the EMS 30 may be provided integrally with an electric product such as a refrigerator that is continually operated for 24 hours. However, the refrigerator is just an example, and thus, the EMS 30 may be provided to any device that operates for 24 hours.

When the EMS 30 is removably attached to the refrigerator 81, the control part 35 of the EMS 30 communicate with a control part 81a of the refrigerator 81 and the advanced metering infrastructure 20 through the communication part 34 via a wire or wireless channel.

Furthermore, the control part 35 may operate by communicating with another electric product such as the washing machine 82, the air conditioner 83, or the cooking appliance 84 through the communication part 34.

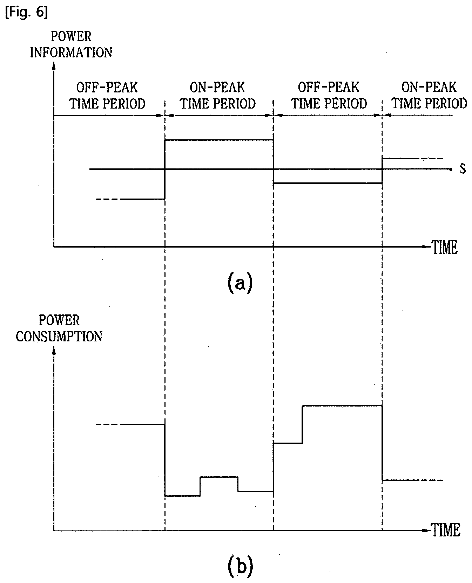

Figs. 6A and 6B are graphs illustrating power information provided to an electric product, which is electricity cost information varied according to time. However, the electricity cost is just an example of power information, and thus, any data can be the power information provided that an on-peak time period within which power consumptions are concentrated is separated from an off-peak time period within the concentration is reduced.

The on-peak time period may be defined as a time period where energy information including an electricity cost is over a predetermined value S, and the off-peak time period may be defined as a time period where energy information including an electricity cost is below the predetermined value S. The value S may be variously defined. For example, a mean value of electricity costs, a mean value of electricity costs after an execution estimated time of an electric product, and a mean value of the maximum and minimum values of electricity costs after the execution estimated time, which are provided from the power information, may be the value S.

In this case, the execution estimated time is an operation time of an electric product when a user set the electric product to be driven after a specific time. Thus, when a user drives an electric product without presetting a driving time of the electric product, a present time when the electric product is driven is the execution estimated time.

Instead of calculating a value based on the power information, a user or a control part of an electric product may define the value S by setting an arbitrary electricity cost. For example, when a user sets the value S as 20 wons, a time period where an electricity cost is over 20 wons per hour is the on-peak time period, and a time period where an electricity cost is 20 wons per hour or less is the off-peak time period. Thus, the user can drive the electric product only within the time period at the value S set as 20 wons or below the value S.

As a result, the on-peek time period is a range where an electric product is driven with a high electricity cost, and the off-peek time period is a range where an electric product is driven with a low electricity cost. Since the on-peek time period is a time period when power consumptions are concentrated with respect to the power supply source, it may be necessary to disperse the concentrated power consumptions from the on-peek time period to the off-peak time period.

According to the present disclosure, a method of controlling an electric product is provided to save an electricity cost and disperse the concentration of power consumptions by limiting at least one function of a power consumption unit of the electric product within the on-peak time period when a driving time of the electric product is within the on-peak time period.

In the method of controlling the electric product, first, power information is received and compared with the value S to identify the on-peak time period and the off-peak time period.

As described above, the power information may be defined as data for separating the on-peak time period within power consumptions are concentrated from the off-peak time period within the concentration is reduced, and an electricity cost is exemplified as a portion of the power information.

The electric product receives power information from a power supply source, and then, the received power information is compared with the value S set in the electric product to identify the on-peak time period and the off-peak time period. When the power information is provided as the electricity cost, the value S is electricity cost data that is input by a user or a control part of the electric product.

However, instead of comparing the power information of the electric product with the value S and analyzing it to indentify the on-peak time period and the off-peak time period, information about the on-peak time period and the off-peak time period may be directly provided to the electric product from the outside of the electric product. That is, a power information provider disposed outside the electric product, such as the power supply source may directly provide the electric product with identification information about the on-peak time period and the off-peak time period.

After the on-peak time period and the off-peak time period are identified, it is determined whether a driving time of the electric product is disposed within the on-peak time period.

When a user selects one of a plurality of operation modes set in the electric product, the operation mode may be set to perform a single process, but a plurality of processes may be combined in a predetermined order.

Thus, when the user selects an operation mode, the control part controlling the driving of the electric product determines an execution estimated time of the selected operation mode, a set total driving time, and an execution end time, and if the on-peak time period is disposed between the execution estimated time and the execution end time, the control part determines that the driving time of the electric product is disposed within the on-peak time period.

When it is determined that the on-peak time period where the received power information is over the value S, the functions of a part of a plurality of power consumption units constituting the electric product may be limited.

The electric product is a combination of a plurality of power consumption units that receive power to perform their functions. For example, a refrigerator may be defined as a combination of units including an evaporator and a compressor to supply cool air into a space storing food, and a washing machine may be defined as a combination of units such as a heater provided to a tub storing washing water to heat the washing water, and a motor providing torque to a drum that rotates in the tub.

Among a plurality of power consumption units constituting the electric product, a power consumption unit having a power consumption amount that is a predetermined reference value or more, or a power consumption unit having the largest power consumption amount may be limited in function.

Thus, in the control method, the power consumption units within the off-peak time period are operated according to setting in an original operation mode of the electric product, but the functions of a part of the power consumption units is limited within the on-peak time period (the rest units perform their own functions).

The power consumption unit limited in function is not a main power consumption unit that performs the functions of the electric product, and thus, only a sub power consumption unit providing an additional function to the electric product may be selected as the power consumption unit limited in function. That is, when the original function of an electric product such as a refrigerator is to decrease the temperature of a storing part for storing food below a predetermined value, a light emitting part that illuminates the inside of the storing part, or an ice making part that produces ice to provide it to a user may be defined as a sub power consumption unit. Accordingly, an electricity cost is reduced by limiting the functions of power consumption units within the on-peak time period, but degradation of the original function of the electric product is minimized.

Fig. 6B is a graph illustrating variations in the power consumption amount of an electric product according to time periods in the control method.

As illustrated in Fig. 6B, in the control method, only a part of the power consumption units within the on-peak time period is limited in function, and thus, an operation of the electric product is maintained, but a power consumption amount of the electric product is significantly reduced than within the off-peak time period.

In this case, power consumption units limited in function such that the number, power consumption amount, electricity cost, and driving time of the power consumption units driven within the on-peak time period may be smaller than those of the power consumption units driven within the off-peak time period may be selected.

The meaning 'the limiting of the function of a power consumption unit' includes stopping of the function of the power consumption unit within the on-peak time period, delaying of the performance of the function to the off-peak time period or advancing of the performance, and driving of the power consumption unit at a low output state within the on-peak time period.

That is, in the control method, the electric product may be controlled such that a part of the power consumption units is operated within the on-peak time period or is driven for a shorter time than an original set driving time (low output control) or the operation of the power consumption unit to be operated within the on-peak time period is shifted to the off-peak time period.

Then, after the on-peak time period is ended, when the off-peak time period starts, the limiting of the function of the power consumption unit can be removed.

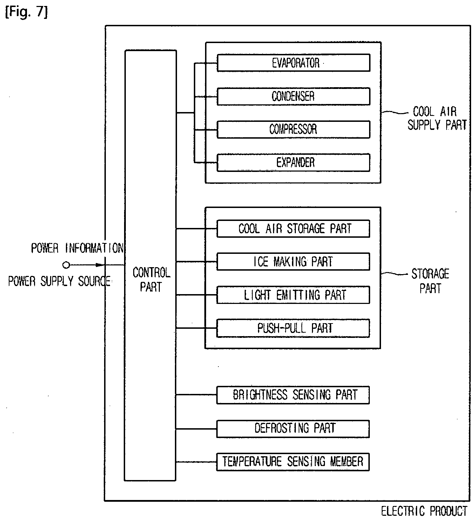

Fig. 7 is a block diagram illustrating a refrigerator as an electric product according to an embodiment. Hereinafter, a method of controlling an electric product will now be described with reference to Fig. 7.

The refrigerator as an electric product may include a storage part providing a space for storing food, a cool air supply part for supplying cool air to the storage part, and a control part controlling the refrigerator. In this case, the control part (EMS) receives power information from a power supply source, and controls a plurality of power consumption units provided to the electric product. The control part may include a first control part (EMS) for receiving power information, and a second control part for controlling the power consumption units.

The cool air supply part may include an evaporator in which liquid refrigerant is evaporated by heat from inner air of the storage part, a compressor compressing the evaporated refrigerant, a condenser heat-exchanging the compressed refrigerator with air outside the storage part to condense it, and an expander expanding the condensed refrigerant.

As described above, in the method of controlling the electric product, the functions of a part of the power consumption units within the on-peak time period are limited. At this point, the function of the compressor is limited.

However, when the function of the compressor is stopped, a heat exchange performance of the refrigerant with the inner air of the storage part is degraded. Thus, the function of the power consumption unit is limited to control the compressor to have a lower output than an original set output.

The refrigerator may include a cool air storage part selectively communicating with the storage part. The cool air storage part includes a cool air storage agent that is frozen by cool air, and an insulation material (vacuum or foam material) that thermally insulates the cool air storage agent from the storage space. In this case, when the functions of a part of the power consumption units is limited, the function of the compressor within the on-peak time period is stopped, and cool air stored in the cool air storage part is supplied to the storage part. That is, since the cool air storage part is controlled to store cool air within the off-peak time period and supply the stored cool air to the storage part within the off-peak time period, although the function of the compressor is stopped within the on-peak time period, the performance of the refrigerator can be maintained.

The refrigerator may further include a defrosting part that defrosts the evaporator in a predetermined cycle, and the defrosting part may be a heater that heats the surface of the evaporator. In this case, when the functions of a part of the power consumption units is limited, the function of the defrosting part within the on-peak time period may be stopped.

Since the defrosting part is driven in a predetermined cycle to remove frost from the surface of the evaporator, the driving of the defrosting part may not be required within a set cycle.

Thus, when a driving cycle of a defrosting part is disposed within the on-peak time period, the function of the power consumption unit may be limited by stopping the function of the defrosting part, or by driving the defrosting part in advance within the off-peak time period before the on-peak time period, or by delaying the driving of the defrosting part within the off-peak time period after the on-peak time period. When the function of the power consumption unit is limited, the defrosting part may be driven at a lower output state.

When the function of the power consumption unit is limited, the driving of the defrosting part may be selectively limited within the on-peak time period. In this case, the refrigerator may further include a temperature measurement member measuring a variation in the temperature of the evaporator (or the temperature of the refrigerant). Since the evaporator is heated by inner air of the storage part to evaporate the refrigerant, when the amount of frost formed on the surface of the evaporator increases, heat exchange is difficult to suppress the temperature increase of the refrigerant (also suppress the temperature increase of the surface of the evaporator).

Thus, in limiting the function of the power consumption unit, only when it is determined that a temperature variation sensed by the temperature measurement member is disposed within a predetermined range (normal temperature variation range), the function of the defrosting part can be stopped.

The refrigerator may further include a plurality of light emitting parts that illuminate the inside of the storage part. The light emitting part may include a plurality of lamps, and be automatically turned on when a door provided to the storage part is opened. In this case, when the function of the power consumption unit is limited, functions of the light emitting parts or functions of a part of the light emitting parts may be stopped within the on-peak time period.

When the refrigerator includes a brightness sensing part that senses the brightness of the outside of the storage part, the function of the power consumption unit is limited by adjusting outputs of the light emitting parts according to the brightness of the outside of the storage part, or by selectively limiting the functions of a part of the light emitting parts.

The refrigerator may further include an ice making part that produces ice. In this case, the function of the power consumption unit is limited by limiting the function of the ice making part within the on-peak time period.

The refrigerator may further include a housing forming its appearance, a drawable drawer provided to the housing, and a push-pull part providing power for pushing and pulling the drawer. The drawer is a space for storing food, and may receive cool air from the cool air supply part, and can be drawn out of the housing.

The push-pull part helps a user push the drawer into the housing or pull the drawer out of the housing. Thus, when a signal that a user pulls the drawer out of the housing is sensed, the push-pull part is operated to push the drawer in a pulling direction of the drawer. When a signal that a user pushes the drawer into the housing is sensed, the push-pull part is operated to pull the drawer in a pushing direction of the drawer to help the pushing of the drawer. The push-pull part may be formed in any structure, for example, may include a motor, a gear provided to the motor, and a rail engaging with the gear and provided to an outer surface the drawer.

In this case, when the function of the power consumption unit is limited, the function of the push-pull part may be limited within the on-peak time period. The drawer and the push-pull part are provided to the refrigerator to store food, but the drawer and the push-pull part may be provided to other electric products than the refrigerator.

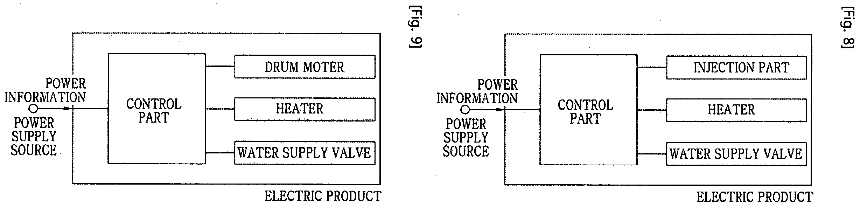

Fig. 8 is a block diagram illustrating a dish washer as an electric product according to an example. A method of controlling the electric product will now be described with reference to Fig. 8.

The dish washer may include a tub receiving a target such as a dish, a sump for storing washing water, a heater for heating water stored in the sump, and an injection part for injecting water stored in the sump to the target. In this case, when the function of the power consumption unit is limited, the function of the heater may be limited within the on-peak time period.

Here, the limiting of the function includes stopping of the function of the heater and a low output control of the heater. However, although the function of the heater is stopped, hot water may be supplied to the sump to prevent a performance degradation of the dish washer. In this case, the dish washer may further include a water supply valve configured to supply hot water to the sump.

Fig. 9 is a block diagram illustrating a washing machine as an electric product according to an example. A method of controlling the electric product will now be described with reference to Fig. 8.

The washing machine may include a tub for storing washing water, a motor for rotating a drum disposed in the tub, and a heating device for heating washing water stored in the tub. In this case, the heating device may include a plurality of heaters connected in series or in parallel. When the function of the power consumption unit is limited, functions of a part of the heaters may be limited within the on-peak time period.

While the present disclosure has been particularly shown and described with reference to exemplary embodiments thereof, it will be understood by those of ordinary skill in the art that various changes in form and details may be made therein without departing from the scope of the present disclosure as defined by the following claims.

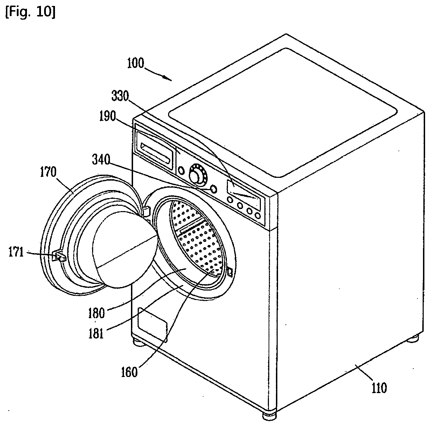

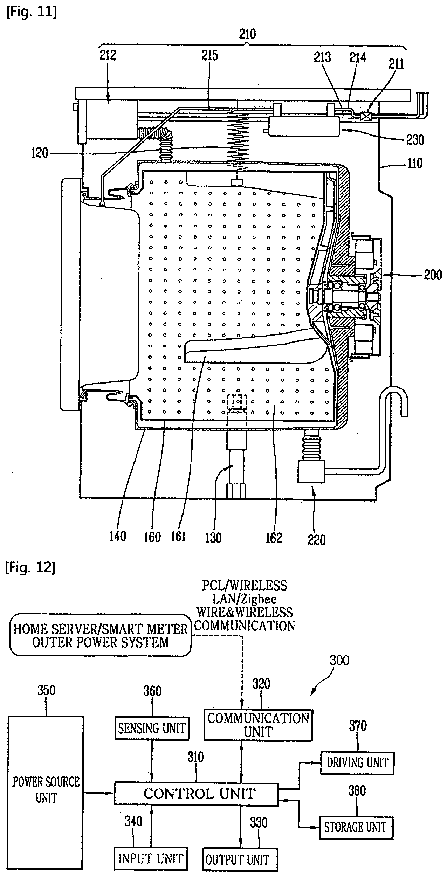

Fig. 10 is a perspective view illustrating a washing machine according to an example. Fig. 11 is a cross-sectional view illustrating the washing machine of Fig. 10.

Referring to Figs. 10 and 11, a drum washing machine 100 according to the current examples includes a cabinet 110 provided with an insertion hole 181 allowing access to a laundry, a door 170 for opening and closing the insertion hole 181, a tub 140 installed within the cabinet 110 to absorb shock and receive washing water, a water supply member 104 including water supply passages 213 and 214 for supplying washing water to the tub 140, a discharge device 220 discharging washing water contaminated in the tub 140, a drum 160 rotatably disposed in the tub 140 to receive a laundry, a motor 200 installed on the tub 140 to rotate the drum 160, and a door switch 171 for locking or unlocking the door 170.

A gasket 180 for sealing the space between the insertion hole 181 and the tub 140 is disposed around the insertion hole 181.

The gasket 180 has an approximately ring or annulet shape with a predetermined height, and the middle part thereof is folded for overlapping. That is, the gasket 180 having a shape to surround the upper and lower parts of the door 170 is folded for overlapping.

A control panel 190 is disposed on the upper portion of the front part of the drum washing machine 100. The control panel 190 includes an output unit 330 displaying various types of information including usage information of the drum washing machine 100, and an input unit 340 receiving information input by a user or a manager, adjustment devices, input devices, and display devices.

A control device 300 (refer to Fig. 12) is disposed within the control panel 190 to control the drum washing machine 100 including the output unit 330 according to signals input from the input devices or an internal control algorithm. The control device 300 may be disposed at another position of the drum washing machine 100.

In more detail, the drum washing machine 100 includes the cabinet 110 forming its appearance, the tub 140 suspended through a spring 120 within the cabinet 110 and supported by a damper assembly 130, the drum 160 rotatably installed within the tub 140 to receive washing water and a laundry, lifts 161 protruding from an inner wall of the drum 160 and spaced a constant distance from one another to raise up a laundry and drop it according to the rotation of the drum 160, the motor 200 connected to the drum 160 behind the tub 140 to rotate the drum 160, and an evaporation device 230 disposed above the tub 140 to heat washing water with high temperature and high pressure vapor and supply the water into the tub 140 and the drum 160.

As illustrated in Fig. 11, a discharge side of the evaporation device 230 may communicate with the inner space of the tub 140.

The drum washing machine 100 further includes a water supply member 210 disposed above the tub 140 to supply washing water into the tub 140 and the drum 160, and a water discharge device 220 disposed below the tub 140 to discharge washing water from the tub 140 and the drum 160. The evaporation device 230 is connected to the water supply member 210.

In detail, the water supply member 210 includes a water supply valve assembly 211 installed on the rear surface of the cabinet 110 to adjust the supplying of water, a detergent box assembly 212 connected between the water supply valve assembly 211 and the tub 140 and storing a detergent, first and second water supply passages 213 and 214 branched from the water supply valve assembly 211 and connected respectively to the detergent box assembly 212 and the evaporation device 230, and a vapor passage 215 having an end connected to the evaporation device 230 and another end disposed in the tub 140 and the drum 160 to supply vapor into the tub 140 and the drum 160.

The inner wall of the drum 160 is provided with a plurality of dehydration holes 162 such that washing water freely flows to the drum 160 and the tub 140 and washing water is removed from a laundry by centrifugal force. The water supply valve assembly 211 includes a water supply valve (not shown) to supply washing water according to an operation of the water supply valve, and the water discharge device 220 includes a water discharge pump (not shown) to discharge washing water according to an operation of the water discharge pump.

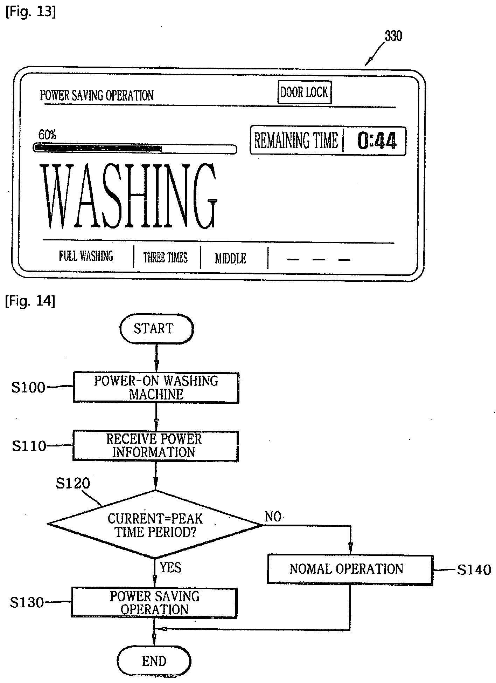

Fig. 12 is a block diagram illustrating a control device of a washing machine according to an example. Fig. 13 is a schematic view illustrating a screen of an output unit of Fig. 12.

Referring to Fig. 12, a control device of the washing machine according to the current example includes an input unit 340 in which an operation mode of the washing machine is set and a process is input, a communication unit 320 connected to an outer device through wire and wireless communications to receive power information, and a control unit 310 performing the process based on the operation mode and the power information.

The power information includes information about a normal time period (the off-peak time period) and a peak time period (the on-peak time period). A higher electricity price is charged within the peak time period than within the normal time period. A time period when a total power usage amount increases and a remaining power (energy) to be supplied to each residential customer decreases to a predetermined value or less is set as a peak time period by a power provider, based on a statistic material or through a real time observation. Thus, the power provider may adjust the using of power by charging a high electricity price in the peak time period. The normal time period is a time period except for the peak time period. Information about the peak time period may be stored in advance in the outer device, that is, at least one of an outer power system and an in-house power related device such as a home server and a smart meter. The power provider can provide information about the peak time period in real time.

The communication unit 320 is connected to the outer device through a wire/wireless communication method to receive the power information. The wire/wireless communication method may any communication method such as a power line communication, wireless LAN, Internet, Zigbee, and a serial communication for data transmission. The communication unit 320 may transmit information such as a power demand amount of the washing machine, an electricity charge, and a greenhouse gas emission amount to the outside through the wire/wireless communication method.

One of the normal operation mode and the power saving operation mode may be set through the input unit 340. When received power information is the normal time period, the control unit 310 performs the process in the normal operation mode. When received power information is the peak time period, the control unit 310 performs the process according to the set operation mode. That is, if the washing machine is set to the normal operation mode, even when the peak time period as power information is received, the control unit 310 of the washing machine performs the process in the normal operation mode. On the contrary, if the washing machine is set to the power saving operation mode, when the peak time period as power information is received, the washing machine performs the process in the power saving operation mode. The operation modes may be automatically switched according to an arbitrary condition.

The control device 300 includes a power source unit 350 connected to an outer power source to supply power into the washing machine; a sensing unit 360 sensing state information of a washing machine including a laundry amount and a water supply temperature; the output unit 330 displaying an operation mode and a process that are input through the input unit 340 or currently operated; and a driving unit 370 driving a motor, a heater, and a fan according to control signals of the control unit 310.

The power source unit 350 receives the outer power, that is, commercial alternating current (AC) power to output a direct current (DC) voltage for driving circuits and units constituting the washing machine and the control device 300. A switched-mode power supply (SMPS) is used as the power source unit 350. As a matter of course, other power conversion devices may be used than the SMPS. The SMPS rectifies and smoothes an AC voltage of outer power to form a DC voltage, and uses a transforming unit such as a high frequency transformer and a regulator to covert the DC voltage to driving voltages for the washing machine and the control device 300.

The sensing unit 360 senses a laundry amount and a water supply temperature and transmits information of the sensed amount and temperature to the control unit 310. The control unit 310 can calculate estimated power consumption and an estimated electricity charge of the washing machine, based on one of the set process and the sensed laundry amount and water supply temperature. The sensing unit 360 senses various types of state information for performing a normal process of the washing machine, and may include a sensor sensing a water level, a sensor sensing a rinsing degree, a sensor sensing a laundry leaning amount, and a sensor sensing a vibration amount of the washing machine. The sensing unit 360 transmits information sensed by the sensors to the control unit 310.

As illustrated in Fig. 13, the output unit 330 displays an operation mode input through the input unit 340 and a process to be performed by the washing machine, or an operation mode and a process that are currently operated.

The driving unit 370 receives a driving signal from the control unit 310 to drive loads for performing separate processes. The loads include the motor 200 rotating a washing drum, a heater for heating water supplied for boiling a laundry, a heater for providing steam, a heater for heating air to dry a laundry, and a fan and a fan motor for generating an air flow during the drying of a laundry.

The control device 300 may further include a storage unit (not shown) that stores at least one of a process to be performed by the washing machine and programmed in advance, a command input through the input unit 340, state information sensed through the sensing unit 360, each information displayed through the output unit 330, power information received through the communication unit 320, and data calculated through the control unit 310.

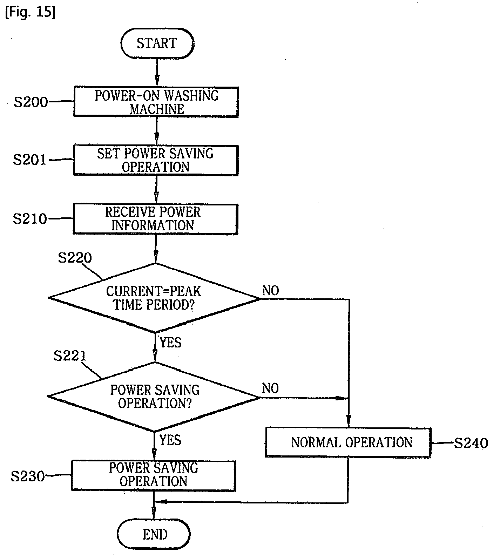

Fig. 14 is a flowchart illustrating a method of controlling a washing machine according to an example. Fig. 15 is a flowchart illustrating a method of controlling a washing machine according to another example.

Referring to Fig. 14, in the method of controlling the washing machine, power is applied to the washing machine in operation S100, and then, a process (driving method including a course) to be performed by the washing machine is input (not shown), and power information including a normal time period and a peak time period when a higher electricity price is charged than within the normal time period is received from an outer device in operation S110, and the process is performed in a normal operation mode or a power saving operation mode, based on the received power information. When it is determined in operation S120 that the received power information is the peak time period, the process is performed in the power saving operation mode in operation S130. When it is determined in operation S120 that the received power information is the normal time period, the process is performed in the normal operation mode in operation S140.

In Fig. 14, the washing machine is exemplified to express a driving method as a process, but when an electric product is a refrigerator, a drying machine, an air conditioner, a cooking appliance, a cleaner, or a water purifier, a driving method corresponding to the characteristics of the electric product may be input or set.

Referring to Fig. 15, in the method of controlling the washing machine according to another example, power is applied to the washing machine in operation S200, and then, a process to be performed by the washing machine is input (not shown), and the normal operation mode and the power saving operation mode are set in operation S201, power information including a normal time period and a peak time period when a higher electricity price is charged than within the normal time period is received from an outer device in operation S210, and the process is performed in the normal operation mode or the power saving operation mode, based on the received power information. When it is determined in operation S220 that the received power information is the normal time period, the process is performed in the normal operation mode in operation S240. When it is determined in operation S220 that the received power information is the peak time period, the process is performed according to a set operation mode. That is, when the process is performed, it is determined in operation S221 whether the power saving operation mode is set in operation S201. When it is determined that the power saving operation mode is set, the process is performed in the power saving operation mode in operation S230. When it is determined that the power saving operation mode is not set, the process is performed in the normal operation mode in operation S240.

A user can set one of the normal operation mode and the power saving operation mode. When received power information is the normal time period, the washing machine performs the process in the normal operation mode. When received power information is the peak time period, the washing machine performs the process according to the set operation mode. That is, if the washing machine is set to the normal operation mode, even when the peak time period as power information is received, the washing machine performs the process in the normal operation mode. On the contrary, if the washing machine is set to the power saving operation mode, when the peak time period as power information is received, the washing machine performs the process in the power saving operation mode. The operation modes may be automatically switched according to an arbitrary condition.

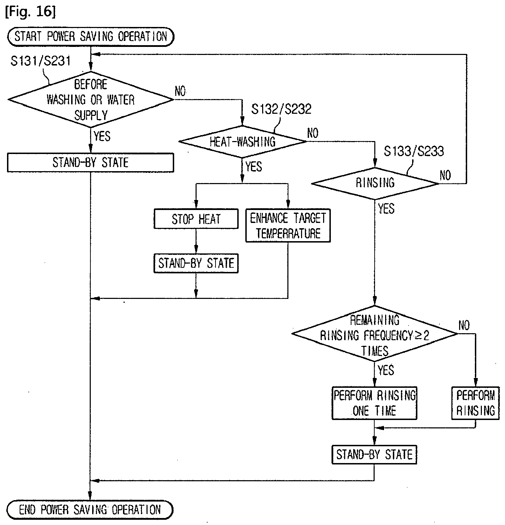

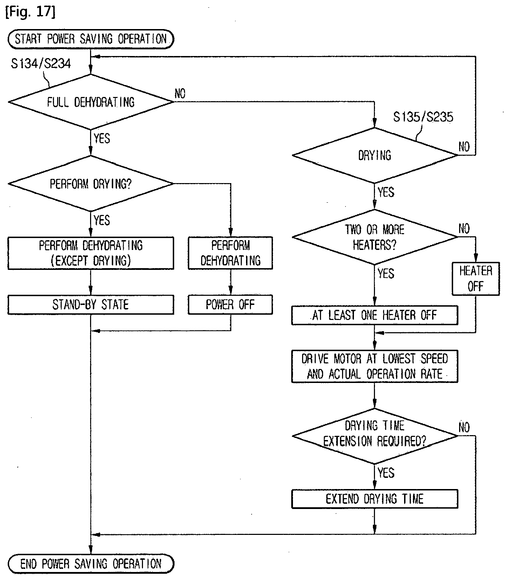

Figs. 16 and 17 are flowcharts illustrating a power saving operation in a method of controlling a washing machine according to an example.

Referring to Figs. 16 and 17, the power saving operation in the method of controlling the washing machine will now be described. In the method, when a power saving operation mode is set by a user, and the communication unit 320 receives power information that is a peak time period, a process that is performed by the washing machine when the power information is received is determined, and a process is performed according to a result of the determining. While the process of the washing machine is performed, a preset function of the process (driving method) may be partially limited.

When the power information is received, if the washing machine is before a washing process or a water supply process in operation S131/S231, the process of the washing machine is stopped and maintained in a standby state until the peak time period is ended or power information about the normal time period is received. That is, if the on-peak time period is recognized before the washing machine performs a specific driving method, the washing machine is maintained in a standby state until the on-peak time period is ended.

When the power information is received, if a heat washing process is performed in operation S132/S232, a heating process is stopped in a standby state until the peak time period is ended. When the power information is received, if the heat washing process is performed in operation S132/S232, a heating target water temperature is decreased to reduce the using of a heater, thereby reducing the using of power. That is, if the on-peak time period is recognized while the washing machine performs a specific driving method, the washing machine stops a specific driving method, and is maintained in a standby state until the on-peak time period is ended.

When the power information is received, if a rinsing process is performed in operation S133/S233, the rinsing process is performed, and then, is maintained in a standby state until the peak time period is ended. Although the rinsing process can be stopped, the rinsing process that requires low power consumption can be performed in the power saving mode. That is, according to the number of times of rinsing to be performed, the washing machine may complete a current process and be switched to a standby state (stop state).

When the power information is received, if a full dehydrating process including a drying process is performed in operation S134/S234, the drying process is stopped and a dehydrating process is performed, or the drying process and the dehydrating process are stopped, and then, is maintained in a standby state until the peak time period is ended. That is, if the on-peak time period is recognized while the washing machine performs a specific driving method, the washing machine completes one of courses constituting the specific driving method, and then, is maintained in a standby state.

When the power information is received, if the full dehydrating process without the drying process is performed in operation S134/S234, the dehydrating process is performed, and then, power is cut off from the washing machine. That is, if the on-peak time period is recognized while the washing machine performs a specific driving method, the washing machine completes one of courses constituting the specific driving method, and then, power is cut off from the washing machine.

When the power information is received, if a drying process is performed in operation S135/S235, the heater is stopped, and the motor 200 is driven at a lowest speed and a lowest actual operation rate to control the number of rotations of the drum 160. In case where two or more heaters are provided, the heaters may be sequentially or simultaneously stopped. In addition, it is determined whether it is necessary to increase a drying time instead of decreasing the output of the heater. When the heater is stopped, if a remaining drying time is over a preset time, a drying time may be extended. If the remaining drying time is below the preset time when the heater is stopped, the drying time may not be extended.

In the method of controlling the washing machine, the power information may further include the type of an outer power source and a greenhouse gas index according to the outer power source. In the method of controlling the washing machine, an estimated electricity cost and a greenhouse gas emission amount may be calculated based on the power information, and at least one of the type of the outer power source, the greenhouse gas index, the estimated electricity cost, and the estimated greenhouse gas emission amount may be output. In the method of controlling the washing machine, an estimated greenhouse gas emission amount of an energy source supplied to the washing machine may be calculated based on the calculated estimated power consumption. For example, a carbon dioxide index depending on the energy source may be multiplied by the calculated estimated power consumption to obtain an estimated emission amount of carbon dioxide. Here, the energy source may include fossil fuels such as oil and gas; alternative energy sources such as solar light, solar heat, wind power, tidal power, water power, and geothermal power; nuclear power; and fuel cells. The greenhouse gas index depending on each energy source, for example, the carbon dioxide index may be set through experiments.

In the control device of the washing machine and the method of controlling the washing machine according to the present disclosure, the power is applied to the washing machine and the information about the current electricity charge time period is received from the outer device through the inner communication unit to provide the information to a user through the output unit. Therefore, the user can select a reasonable method for saving the power. Also, the power saving operation mode is performed within the peak time period to reasonably use energy. In addition, in the control device of the washing machine and the method of controlling the washing machine according to the present disclosure, the type of an outer power source and a greenhouse gas index depending on the outer power source may be received from the outer device, and the estimated electricity cost and the greenhouse gas emission amount are calculated based on the type of the outer power source and the greenhouse gas index. Thus, the user can save the power. That is, in the control device of the washing machine and the method of controlling the washing machine according to the present disclosure, a user may confirm the reality of power usage of the washing machine and electricity usage in real time, and be guided to voluntary energy saving. Thus, the peak power may be reduced at the national level to contribute to a build of the next generation power grid such as the smart grid.

Although embodiments have been described with reference to a number of illustrative embodiments thereof, it should be understood that numerous other modifications and embodiments can be devised by those skilled in the art that will fall within scope of the principles of this disclosure as defined by the following claims. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

### INDUSTRIAL APPLICABILITY

The device of controlling the electric product according to the embodiments provides the method of controlling the electric product, which can remove the concentration of power consumptions, so that a power supplier can effectively manage power consumptions and a consumer can save electricity costs and energy.

## Claims

1. A method of controlling an electric product included in network system, the method comprising:
performing (S110) a communication between a power supply source and the electric product in a home network;
recognizing (S120, S220) an on-peak time period in which energy information including at least electricity cost information is over a set value; and
limiting a function of a part of power consumption units (81, 82, 83) constituting the electric product when at least one period of a driving time of the electric product is disposed within the on-peak time period,
**characterized in that** the power consumption units (81, 82, 83) comprise a motor (200), a heater (230) and fan,
wherein limiting of the function of the part of the power consumption units (81, 82, 83) comprises at least one of :
limiting the function of the power consumption unit (81, 82, 83) having higher power consumption than the others, among the motor, the heater and the fan;
limiting the function of the power consumption unit (81, 82, 83) having a power consumption amount greater than a preset reference amount, among the motor, the heater and the fan; and
limiting the function of the power consumption unit (81, 82, 83) having a largest power consumption amount, among the motor, the heater and the fan;
wherein the limiting the function comprises stopping the functions of the power consumption units (81, 82, 83) or decreasing an output of the power consumption unit (81, 82, 83) to a set output or less,
wherein the electric product comprises a refrigerator including:
a storage part;
a cool air supply part comprising a compressor, a condenser, an expander and an evaporator to supply cool air to the storage part;
a cool air storage part selectively communicating with the storage part and comprising a cool air storage agent that is frozen by cool air and an insulation material that thermally insulates the cool air storage agent from the storage space, and
wherein the limiting of the function of the part of the power consumption units (81, 82, 83) comprises controlling the compressor to have a lower output than a predetermined output thereof and supplying stored cool air in the cool air storage part to the storage part to maintain performance of the refrigerator.

2. The method according to claim 1, wherein electricity cost generated according to driving of the power consumption unit is decreased when the function of the part of the power consumption units is limited.

3. The method according to claim 1, wherein a driving time of the power consumption unit is decreased when the function of the part of the power consumption units is limited.

4. The method according to claim 1, wherein the limiting the function of the part of the power consumption units further comprises limiting at least one portion of a driving method performed by the electric product.

5. The method according to claim 4, wherein the driving method performed by the electric product is entirely stopped when the on-peak time period is recognized.

6. The method according to claim 4, wherein when the on-peak time period is recognized, the electric product completes one of methods constituting the driving method, and stops another method.

7. The method according to claim 4, wherein when the on-peak time period is recognized, the electric product completes a driving method that is currently performed, and then, stops driving.

8. The method according to claim 1, wherein the power supply source sets energy information related with the on-peak time period.

9. The method according to claim 8, wherein the on-peak time period is a time period in which remaining energy to be supplied through the home network decreases to the set value or less.

## Patentansprüche

1. Verfahren zum Steuern eines elektrischen Produkts, das in einem Netzsystem enthalten ist, wobei das Verfahren umfasst:
Ausführen (S110) einer Kommunikation zwischen einer Leistungsversorgungsquelle und dem elektrischen Produkt in einem Heimnetz;
Erkennen (S120, S220) einer Hochlastzeitdauer, in der Energieinformationen, die zumindest Energiekosteninformationen enthalten, über einem eingestellten Wert liegen; und
Begrenzen einer Funktion eines Teils von Leistungsverbrauchseinheiten (81, 82, 83), die das elektrische Produkt bilden, wenn zumindest eine Dauer einer Ansteuerungszeit des elektrischen Produkts innerhalb der Hochlastzeitdauer angeordnet ist,
**dadurch gekennzeichnet, dass** die Leistungsverbrauchseinheiten (81, 82, 83) einen Motor (200), ein Heizgerät (230) und ein Gebläse umfassen,
wobei das Begrenzen der Funktion eines Teils der Leistungsverbrauchseinheiten (81, 82, 83) zumindest eines des Folgenden umfasst:
Begrenzen der Funktion der Leitungsverbrauchseinheit (81, 82, 83) unter dem Motor, dem Heizgerät und dem Gebläse mit einem größeren Leistungsverbrauch als die anderen;
Begrenzen der Funktion der Leistungsverbrauchseinheit (81, 82, 83) unter dem Motor, dem Heizgerät und dem Gebläse mit einem Leistungsverbrauchsbetrag, der größer als ein voreingestellter Referenzbetrag ist,; und
Begrenzen der Funktion der Leistungsverbrauchseinheit (81, 82, 83) unter dem Motor, dem Heizgerät und dem Gebläse mit dem größten Leistungsverbrauchsbetrag;
wobei das Begrenzen der Funktion umfasst, die Funktionen der Leistungsverbrauchseinheiten (81, 82, 83) zu stoppen oder eine Ausgabe der Leistungsverbrauchseinheit (81, 82, 83) auf eine eingestellte Ausgabe oder weniger zu verringern,
wobei das elektrische Produkt einen Kühlschrank umfasst, der enthält:
einen Speicherteil;
einen Teil zum Zuführen kühler Luft, der einen Kompressor, einen Kondensator, eine Ausdehnungseinrichtung und einen Verdampfer umfasst, um dem Speicherteil kühle Luft zuzuführen;
einen Teil zum Speichern kühler Luft, der wahlweise mit dem Speicherteil kommuniziert und ein Mittel zum Speichern kühler Luft, das durch kühle Luft gefriert, und ein Isoliermaterial, dass das Mittel zum Speichern kühler Luft von dem Speicherraum thermisch isoliert, umfasst und
wobei das Begrenzen der Funktion des Teils der Leistungsverbrauchseinheiten (81, 82, 83) umfasst, den Kompressor so zu steuern, dass er eine kleinere Ausgabe als eine vorgegebene Ausgabe von ihm besitzt, und in dem Teil zum Speichern kühler Luft gespeicherte kühle Luft dem Speicherteil zuzuführen, um die Leistung des Kühlschranks aufrechtzuerhalten.

2. Verfahren nach Anspruch 1, wobei die Elektrizitätskosten, die gemäß dem Ansteuern der Leistungsverbrauchseinheit erzeugt werden, gesenkt werden, wenn die Funktion des Teils der Leistungsverbrauchseinheit begrenzt wird.

3. Verfahren nach Anspruch 1, wobei eine Ansteuerungszeit der Leistungsverbrauchseinheit verringert wird, wenn die Funktion des Teils der Leistungsverbrauchseinheiten begrenzt wird.

4. Verfahren nach Anspruch 1, wobei das Begrenzen der Funktion des Teils der Leistungsverbrauchseinheiten ferner umfasst, zumindest einen Teil eines Ansteuerungsverfahrens, das durch das elektrische Produkt ausgeführt wird, zu begrenzen.

5. Verfahren nach Anspruch 4, wobei das durch das elektrische Produkt ausgeführte Ansteuerungsverfahren vollständig gestoppt wird, wenn die Hochlastzeitdauer erkannt wird.

6. Verfahren nach Anspruch 4, wobei dann, wenn die Hochlastzeitdauer erkannt wird, das elektrische Produkt eines der Verfahren abschließt, die das Ansteuerungsverfahren bilden, und ein anderes Verfahren stoppt.

7. Verfahren nach Anspruch 4, wobei dann, wenn die Hochlastzeitdauer erkannt ist, das elektrische Produkt ein Ansteuerungsverfahren abschließt, das derzeit ausgeführt wird, und dann das Ansteuern stoppt.

8. Verfahren nach Anspruch 1, wobei die Leistungsversorgungsquelle Energieinformationen bezüglich der Hochlastzeitdauer einstellt.

9. Verfahren nach Anspruch 8, wobei die Hochlastzeitdauer eine Zeitdauer ist, in der die verbleibende Energie, die durch das Heimnetz zuzuführen ist, auf den eingestellten Wert oder weniger abnimmt.

## Revendications

1. Procédé de commande d'un produit électrique inclus dans un système de réseau, le procédé comprenant :
l'exécution (S110) d'une communication entre une source d'alimentation électrique et le produit électrique dans un réseau résidentiel ;
la reconnaissance (S120, S220) d'une période de temps de fonctionnement en heures de pointe au cours de laquelle des informations d'énergie comprenant au moins des informations de coût d'électricité dépassent une valeur de consigne ; et
la limitation d'une fonction d'une partie d'unités de consommation de courant (81, 82, 83) constituant le produit électrique lorsqu'au moins une période d'un temps de fonctionnement du produit électrique est disposée à l'intérieur de la période de temps de fonctionnement en heures de pointe,
**caractérisé en ce que** les unités de consommation de courant (81, 82, 83) comprennent un moteur (200), un chauffage (230) et un ventilateur,
dans lequel la limitation de la fonction de la partie des unités de consommation de courant (81, 82, 83) comprend au moins l'une de :
la limitation de la fonction de l'unité de consommation de courant (81, 82, 83) ayant une plus grande consommation de courant que les autres, parmi le moteur, le chauffage et le ventilateur ;
la limitation de la fonction de l'unité de consommation de courant (81, 82, 83) ayant une quantité de consommation de courant supérieure à une quantité de référence préréglée, parmi le moteur, le chauffage et le ventilateur ; et
la limitation de la fonction de l'unité de consommation de courant (81, 82, 83) ayant la plus grande quantité de consommation de courant, parmi le moteur, le chauffage et le ventilateur ;
dans lequel la limitation de la fonction comprend l'arrêt des fonctions des unités de consommation de courant (81, 82, 83) ou la réduction d'une sortie de l'unité de consommation de courant (81, 82, 83) à une sortie de consigne ou moins,
dans lequel le produit électrique comprend un réfrigérateur comprenant :
une partie de stockage ;
une partie d'alimentation d'air froid comprenant un compresseur, un condensateur, un extenseur et un évaporateur pour fournir de l'air froid à la partie de stockage ;
une partie de stockage d'air froid communiquant sélectivement avec la partie de stockage et comprenant un agent de stockage d'air froid qui est congelé par un air froid et un matériau isolant qui isole thermiquement l'agent de stockage d'air froid de l'espace de stockage, et
dans lequel la limitation de la fonction de la partie des unités de consommation de courant (81, 82, 83) comprend la commande au compresseur d'avoir une sortie inférieure à une sortie prédéterminée de celui-ci et la fourniture d'air froid stocké dans la partie de stockage d'air froid à la partie de stockage pour maintenir une performance du réfrigérateur.

2. Procédé selon la revendication 1, dans lequel un coût d'électricité généré d'après un fonctionnement de l'unité de consommation de courant est réduit lorsque la fonction de la partie des unités de consommation de courant est limitée.

3. Procédé selon la revendication 1, dans lequel un temps de fonctionnement de l'unité de consommation de courant est réduit lorsque la fonction de la partie des unités de consommation de courant est limitée.

4. Procédé selon la revendication 1, dans lequel la limitation de la fonction de la partie des unités de consommation de courant comprend en outre la limitation d'au moins une portion d'un procédé de fonctionnement effectué par le produit électrique.

5. Procédé selon la revendication 4, dans lequel le procédé de fonctionnement effectué par le produit électrique est entièrement arrêté lorsque la période de temps de fonctionnement en heures de pointe est reconnue.

6. Procédé selon la revendication 4, dans lequel, lorsque la période de temps de fonctionnement en heures de pointe est reconnue, le produit électrique termine l'un des procédés constituant le procédé de fonctionnement et arrête un autre procédé.

7. Procédé selon la revendication 4, dans lequel, lorsque la période de temps de fonctionnement en heures de pointe est reconnue, le produit électrique termine un procédé de fonctionnement qui est en cours d'exécution, puis arrête le fonctionnement.

8. Procédé selon la revendication 1, dans lequel la source d'alimentation électrique règle des informations d'énergie relatives à la période de temps de fonctionnement en heures de pointe.

9. Procédé selon la revendication 8, dans lequel la période de temps de fonctionnement en heures de pointe est une période de temps au cours de laquelle une énergie restante à fournir à travers le réseau résidentiel diminue à la valeur de consigne ou moins.
